# FASCICULE DE BREVET EUROPEEN

(11) **EP 2 448 788 B1**
(45) Date de publication et mention de la délivrance du brevet: **17.04.2013**
(21) Numéro de dépôt: 10734504.3
(22) Date de dépôt: 31.05.2010
(51) Int. Cl.: B60R 13/04

(54) **DISPOSITIF POUR FIXER UNE PIECE ALLONGEE SUR UNE SURFACE GALBEE DANS DEUX DIRECTIONS ET SON APPLICATION A LA FIXATION D'UN ENJOLIVEUR SUR UN VITRAGE DE VEHICULE AUTOMOBILE.**
VORRICHTUNG ZUM FIXIEREN EIN LÄNGE STÜCK AUF EINE IN ZWEI DIREKTIONEN AUSGEBAUCHTE FLÄCHE UND SEINE VERWENDUNG ZUR FIXIERUNG EINER VERZIERUNG AUF EIN KRAFTFAHRZEUGFENSTER
DEVICE FOR SECURING AN ELONGATE PART ON A SURFACE WHICH CURVES IN TWO DIRECTIONS, AND USE THEREOF FOR SECURING A TRIM ON A GLASS PANEL OF A MOTOR VEHICLE

(30) Priorité: 03.07.2009 FR 0954597
(43) Date de publication de la demande: 09.05.2012
(73) Titulaire: PEUGEOT CITROËN AUTOMOBILES SA, 78140 Vélizy Villacoublay (FR)
(72) Inventeur: GUIDEZ, Frédéric, F-59400 Cambrai (FR)
(74) Mandataire: Fosse, Danièle
(86) Numéro de dépôt international: PCT/FR2010/051048
(87) Numéro de publication internationale: WO 2011/001054

(56) Documents cités:
- EP-A1- 0 377 376
- EP-A1- 1 548 082
- DE-A1- 10 232 447
- FR-A1- 2 792 591
- GB-A- 2 072 103
- JP-A- 1 311 929

## Description

La présente invention concerne un dispositif pour fixer une pièce allongée sur une surface galbée dans deux directions.

Les documents EP-A1-1548082 et JP-A-01311929 concernant un tel dispositif et divulguent le préambule de la revendication 1.

L'invention concerne également l'application d'un tel dispositif à la fixation d'une pièce allongée, en particulier d'un enjoliveur sur un vitrage tel qu'un pare-brise de véhicule automobile.

Certains véhicules automobiles sont équipés d'un pare-brise dont les deux bords latéraux sont pourvus chacun d'un enjoliveur 1 en matière plastique ou en métal.

Ces enjoliveurs sont fixés sur le pare-brise au moyen d'un cordon ou ruban adhésif qui est écrasé entre l'enjoliveur et le pare-brise.

Le pare-brise est galbé dans deux directions.

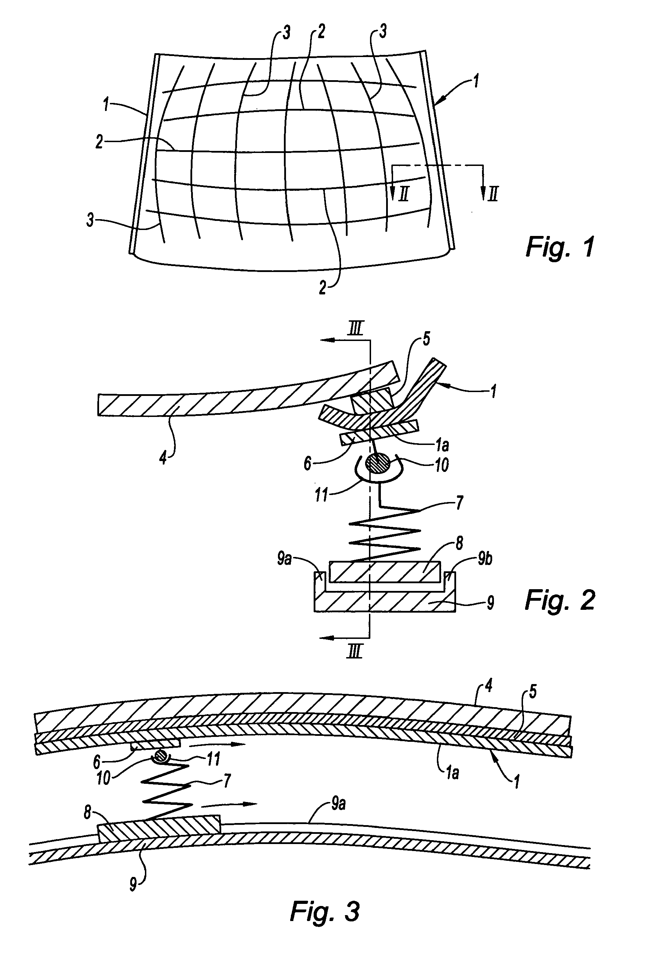

La figure 1 montre un pare-brise sur lequel on a représenté des lignes 2 qui symbolisent le galbe horizontal et des lignes 3 qui symbolisent le galbe vertical.

Pour obtenir une bonne adhérence de l'enjoliveur 1 sur le pare-brise, la pression pour écraser l'adhésif doit avoir une valeur minimale et elle doit être homogène sur toute la longueur de l'enjoliveur 1.

De plus, le temps de mise en pression de l'adhésif doit avoir une valeur minimale.

Ces conditions sont cependant difficiles à respecter, compte tenu du galbe bidirectionnel du pare-brise.

Ainsi, les enjoliveurs sont souvent mal fixés sur le pare-brise, ce qui entraîne des retouches lors de la fabrication ou en service après-vente.

De plus, lorsque le véhicule circule à grande vitesse, le flux aérodynamique peut décoller un enjoliveur, ce qui implique un risque de sécurité pour les occupants d'autres véhicules.

On connaît selon le document GB 2 302 360 un dispositif pour appliquer un joint sur le contour d'un pare-brise.

Ce dispositif permet d'absorber les différentes courbures d'un pare-brise.

Cependant, l'adhésif utilisé est liquide, de sorte que les conditions de mise en oeuvre des pressions minimale et homogène évoquées plus haut ne sont pas applicables.

Le but de la présente invention est de proposer un dispositif pour fixer une pièce allongée sur une surface galbée dans deux directions au moyen d'un cordon de collage permettant d'écraser ce dernier avec une pression suffisante et homogène tout le long de cette pièce allongée.

Ce but est atteint, selon l'invention, grâce à un dispositif pour fixer une pièce allongée sur une surface galbée dans deux directions, comprenant des moyens pour appliquer un cordon adhésif sur la surface galbée et ladite pièce allongée sur ledit cordon adhésif et des moyens pour appliquer une pression sur la face de ladite pièce allongée opposée à celle en contact avec le cordon adhésif, caractérisé en ce qu'il comprend :
- un patin de glissement ou de roulement adapté pour venir en contact et glisser ou rouler sur ladite face de la pièce allongée,
- des moyens pour appliquer une pression sur ledit patin dirigée vers ladite surface galbée, ces moyens étant supportés par,
- un chariot mobile sur un rail cintré dans deux directions pour suivre le galbe bidirectionnel de ladite surface galbée.

Etant donné que le rail du dispositif selon l'invention, le chariot et le patin suivent le galbe bidirectionnel de la surface galbée, les moyens d'application de pression exercent sur la pièce allongée et le cordon adhésif une pression qui est homogène tout le long de cette pièce.

De préférence, lesdits moyens pour appliquer une pression sur ledit patin sont reliés à ce patin par une liaison articulée.

Cette liaison articulée est de préférence une liaison à rotule qui permet de suivre parfaitement le galbe bidirectionnel de la surface.

Les moyens pour appliquer une pression peuvent être des moyens mécaniques, pneumatiques ou électromagnétiques.

Dans une version simple de l'invention, ces moyens comprennent un ressort.

Le chariot peut être déplacé manuellement sur le rail ou être entraîné par un moteur.

L'invention concerne également l'application du dispositif selon l'invention à la fixation d'une pièce allongée sur le vitrage en particulier le pare-brise d'un véhicule automobile.

Cette pièce allongée peut être un enjoliveur.

L'invention concerne en outre, un vitrage, notamment un pare-brise de véhicule automobile comprenant sur l'un au moins de ses bords, un enjoliveur fixé au moyen d'un dispositif selon l'invention.

D'autres particularités et avantages de l'invention apparaîtront encore tout au long de la description ci-après.

Aux dessins annexés, donnés à titre d'exemples, non limitatifs :
- la figure 2 est une vue en coupe à échelle agrandie suivant le plan II-II du pare-brise représenté sur la figure 1, montrant un dispositif pour fixer un enjoliveur le long d'un bord du pare-brise,
- la figure 3 est une vue en coupe suivant le plan III-III de la figure 2.

Le dispositif représenté sur les figures 2 et 3 permettant de fixer l'enjoliveur 1 sur le pare-brise 4 comprend essentiellement des moyens pour appliquer un cordon adhésif 5 sur la surface galbée du pare-brise 4 et l'enjoliveur 1 sur ce cordon adhésif 5 et des moyens pour appliquer une pression sur la face 1a de l'enjoliveur 1 opposée à celle en contact avec le cordon adhésif 5.

Suivant l'invention, ce dispositif comprend :
- un patin de glissement 6 adapté pour venir en contact et glisser sur la face 1a de l'enjoliveur 1,
- des moyens 7 pour appliquer une pression sur le patin 6 dirigée vers le pare-brise 4, ces moyens étant supportés par,
- un chariot 8 mobile sur un rail 9 cintré dans deux directions pour suivre le galbe bidirectionnel du pare-brise 4.

Lors de son déplacement le long du rail 9, le chariot 8 est guidé par deux bords relevés 9a, 9b du rail 9, comme montré sur la figure 2.

Le chariot 8 peut être agencé pour glisser sur le rail 9 ou pour rouler sur celui-ci grâce à des galets ou analogues.

Le chariot 8, en se déplaçant le long du rail 9 entraîne le patin 6 suivant la trajectoire complexe du rail 9 en faisant glisser ce patin 6 sur la face 1 a du profilé 1.

Le patin 6 peut être équipé de rouleaux ou analogues pour pouvoir rouler sur le profilé 1.

Dans l'exemple représenté sur les figures 2 et 3, les moyens 7 permettant d'appliquer une pression sur le patin 6 en contact avec le profilé 1, comprennent un ressort hélicoïdal qui est comprimé entre le chariot 8 et le patin 6.

Ce ressort 7 applique sur le patin 6 une pression qui est homogène, tout au long du trajet de glissement ou de roulement du patin 6 sur le profilé 1.

Ainsi, le cordon 5 est écrasé entre le pare-brise 4 et le profilé 1 d'une façon qui est également homogène, malgré la complexité de la surface galbée du pare-brise 4.

Le ressort 7 est relié au patin 6 par une liaison articulée qui comprend une rotule 10 fixée sous le patin 6 engagée dans une coupelle 11 fixée à l'extrémité supérieure du ressort 7.

Cette liaison à rotule permet au patin 6 de suivre fidèlement le galbe bidirectionnel du pare-brise 4.

Le tarage du ressort 7 est calculé pour que le patin 6 exerce sur le profilé 1 et le cordon adhésif 5 une pression suffisante pour obtenir une adhésion optimale entre le profilé 1 et le pare-brise 4.

Par ailleurs, la vitesse de déplacement du chariot 8 sur le rail 9 est calculée pour que la durée d'application de la pression sur le profilé 1 et l'adhésif 5 soit suffisante pour obtenir une adhésion optimale.

Le ressort 7 peut être remplacé par des moyens d'application de pression tels que des vérins pneumatique, hydrauliques ou électromagnétiques.

Ces moyens peuvent être adaptés pour exercer une pression fixe ou réglable.

Le chariot 8 peut être déplacé manuellement ou entraîné par un moteur électrique.

Grâce au dispositif de fixation ci-dessus, le profilé 1 est collé sur le bord du pare-brise 4 dans des conditions optimales, de sorte qu'on évite tout risque de décollement de ce profilé 1.

Bien entendu, l'invention peut s'appliquer à la fixation au moyen d'un cordon adhésif de pièces autres que des enjoliveurs sur des surfaces galbées autres que les pare-brises ou autres vitrages de véhicules automobiles.

## Revendications

1. Dispositif pour fixer une pièce allongée (1) sur une surface (4) galbée dans deux directions, comprenant des moyens pour appliquer un cordon adhésif (5) sur la surface galbée (4) et ladite pièce allongée (1) sur ledit cordon adhésif (5) et des moyens pour appliquer une pression sur la face de ladite pièce allongée (1) opposée à celle en contact avec le cordon adhésif (5), **caractérisé en ce qu'**il comprend :
- un patin de glissement (6) ou de roulement adapté pour venir en contact et glisser ou rouler sur ladite face de la pièce allongée (1),
- des moyens (7) pour appliquer une pression sur ledit patin (6) dirigée vers ladite surface galbée (4), ces moyens (7) étant supportés par,
- un chariot (8) mobile sur un rail (9) cintré dans deux directions pour suivre le galbe bidirectionnel de ladite surface galbée (4).

2. Dispositif selon la revendication 1, **caractérisé en ce que** lesdits moyens (7) pour appliquer une pression sur ledit patin (6) sont reliés à ce patin par une liaison articulée.

3. Dispositif selon la revendication 2, **caractérisé en ce que** ladite liaison articulée est une liaison à rotule (10, 11).

4. Dispositif selon l'une des revendications 1 à 3, **caractérisé en ce que** lesdits moyens (7) pour appliquer une pression sont des moyens mécaniques, pneumatiques, hydrauliques ou électromagnétiques.

5. Dispositif selon la revendication 4, **caractérisé en ce que** lesdits moyens comprennent un ressort (7).

6. Dispositif selon l'une des revendications 1 à 5, **caractérisé en ce que** ledit chariot (8) est déplaçable manuellement.

7. Dispositif selon l'une des revendications 1 à 5, **caractérisé en ce que** ledit chariot (8) est entraîné par un moteur.

8. Application du dispositif selon l'une des revendications 1 à 7 à la fixation d'une pièce allongée (1) sur le vitrage (4) d'un véhicule automobile.

9. Application selon la revendication 8, dans laquelle le vitrage (4) est un pare-brise.

10. Application selon l'une des revendications 8 ou 9, dans laquelle la pièce allongée (1) est un enjoliveur.

11. Vitrage, notamment pare-brise de véhicule automobile comprenant sur l'un au moins de ses bords un enjoliveur (1) fixé au moyen d'un dispositif selon l'une des revendications 1 à 7.

## Claims

1. Device for securing an elongate part (1) on a surface (4) which curves in two directions, including means for applying an adhesive bead (5) on the curved surface (4) and said elongate part (1) onto said adhesive bead (5) and means for applying pressure onto the surface of said elongate part (1) opposite the surface in contact with the adhesive bead (5), **characterised in that** it comprises:
- a sliding or rolling pad (6) for contacting and sliding or rolling on said surface of the elongate part (1),
- means (7) for applying pressure onto said pad (6) directed towards said curved surface (4), with these means (7) being supported by,
- a movable carriage (8) on a rail (9) that is arched in two directions in order to follow the bidirectional curve of said curved surface (4).

2. Device according to claim 1, **characterised in that** said means (7) for applying pressure onto said pad (6) are connected to this pad by an articulated connection.

3. Device according to claim 2, **characterised in that** said articulated connection is a ball-joint connection (10, 11).

4. Device according to one of claims 1 to 3, **characterised in that** said means (7) for applying pressure are mechanical, pneumatic, hydraulic or electromagnetic means.

5. Device according to claim 4, **characterised in that** said means include a spring (7).

6. Device according to one of claims 1 to 5, **characterised in that** said carriage (8) can be displaced manually.

7. Device according to one of claims 1 to 5, **characterised in that** said carriage (8) is driven by a motor.

8. Application of the device according to one of claims 1 to 7 for securing an elongate part (1) on the glass panel (4) of a motor vehicle.

9. Device according to claim 8, wherein the glass panel (4) is a windscreen.

10. Application according to one of claims 8 or 9, wherein the elongate part (1) is a trim.

11. Glass panel, in particular the windscreen of a motor vehicle comprising on at least one of its edges a trim (1) secured by means of a device according to one of claims 1 to 7.

## Patentansprüche

1. Vorrichtung zum Befestigen eines länglichen Teils (1) auf einer in zwei Richtungen abgerundeten Oberfläche (4), umfassend Vorrichtungen zum Anbringen eines Klebewulstes (5) auf der abgerundeten Oberfläche (4) und des besagten länglichen Teils (1) auf dem besagten Klebewulst (5), sowie Vorrichtungen zum Anlegen eines Drucks auf die Fläche des besagten länglichen Teils (1), die jener gegenüber liegt, die mit dem Klebewulst (5) in Berührung kommt, **dadurch gekennzeichnet, dass** sie folgendes umfasst:
- einen Gleitschuh (6) oder Rollenschuh, der geeignet ist, mit der besagten Fläche des länglichen Teils (1) in Berührung zu kommen, und darauf zu gleiten oder zu rollen,
- Vorrichtungen (7) zum Anlegen eines Drucks auf den besagten Schuh (6), der auf die besagte abgerundete Oberfläche (4) gerichtet ist, wobei diese Vorrichtungen (7) getragen werden von,
- einem Schlitten (8), der sich auf einer Schiene (9) bewegt, die in zwei Richtungen gebogen ist, um der in zwei Richtungen verlaufenden Rundung der besagten abgerundeten Oberfläche (4) zu folgen.

2. Vorrichtung nach Anspruch 1, **dadurch gekennzeichnet, dass** die besagten Vorrichtungen (7) zum Anlegen eines Drucks auf den besagten Schuh (6) durch eine gelenkige Verbindung mit diesem Schuh verbunden sind.

3. Vorrichtung nach Anspruch 2, **dadurch gekennzeichnet, dass** die besagte gelenkige Verbindung eine Kugelgelenkverbindung (10, 11) ist.

4. Vorrichtung nach einem der Ansprüche 1 bis 3, **dadurch gekennzeichnet, dass** die besagten Vorrichtungen (7) zum Anlegen eines Drucks mechanische, pneumatische, hydraulische oder elektromagnetische Vorrichtungen sind.

5. Vorrichtung nach Anspruch 4, **dadurch gekennzeichnet, dass** die besagten Vorrichtungen eine Feder (7) umfassen.

6. Vorrichtung nach einem der Ansprüche 1 bis 5, **dadurch gekennzeichnet, dass** der besagte Schlitten (8) von Hand verfahren werden kann.

7. Vorrichtung nach einem der Ansprüche 1 bis 5, **dadurch gekennzeichnet, dass** der besagte Schlitten (8) von einem Motor angetrieben wird.

8. Anwendung der Vorrichtung nach einem der Ansprüche 1 bis 7 zum Befestigen eines länglichen Teils (1) auf der Scheibe (4) eines Kraftfahrzeugs.

9. Anwendung nach Anspruch 8, bei der die Scheibe (4) eine Windschutzscheibe ist.

10. Anwendung nach einem der Ansprüche 8 oder 9, bei der das längliche Teil (1) eine Zierleiste ist.

11. Scheibe, im Speziellen eine Windschutzscheibe eines Kraftfahrzeugs, umfassend an zumindest einem ihrer Ränder eine Zierleiste (1), die mit einer Vorrichtung nach einem der Ansprüche 1 bis 7 befestigt wird.
